# EUROPÄISCHE PATENTSCHRIFT

(11) **EP 3 499 333 B1**
(45) Veröffentlichungstag und Bekanntmachung des Hinweises auf die Patenterteilung: **14.07.2021**
(21) Anmeldenummer: 18193413.4
(22) Anmeldetag: 10.09.2018
(51) Int. Cl.: G05D 1/02

(54) **FAHRERLOSES TRANSPORTSYSTEM UND VERFAHREN ZUM BETREIBEN EINES FAHRERLOSEN TRANSPORTSYSTEMS**
DRIVERLESS TRANSPORT SYSTEM AND METHOD FOR OPERATING SAME
SYSTÈME DE TRANSPORT AUTOGUIDÉ ET PROCÉDÉ DE FONCTIONNEMENT D'UN SYSTÈME DE TRANSPORT AUTOGUIDÉ

(30) Priorität: 18.12.2017 DE 102017011694
(43) Veröffentlichungstag der Anmeldung: 19.06.2019
(73) Patentinhaber: AUDI AG, 85045 Ingolstadt (DE)
(72) Erfinder: Gensberger, Thomas, 85110 Schelldorf (DE); Jakob, Thomas, 85120 Hepberg (DE)

(56) Entgegenhaltungen:
- DE-U1-202017 004 902
- US-A1- 2010 312 387
- US-B1- 9 733 646

## Beschreibung

Die Erfindung betrifft ein Transportsystem, insbesondere für eine Produktionsanlage, sowie ein Verfahren zum Betreiben eines solchen Transportsystems.

Fahrerlose Transportsysteme mit fahrerlosen Transportfahrzeugen werden schon seit einiger Zeit vor allem zur Unterstützung von Logistikprozessen eingesetzt. So zeigen beispielsweise die DE 10 2014 111 385 A1 und die EP 3 170 773 A1 jeweilige Transportsysteme, welche eine Vielzahl von fahrerlosen Transportfahrzeugen zum Materialtransport aufweisen.

Die US 2010/312387 A1 beschreibt eine Vorrichtung, welche eine Anzahl von Robotermaschinengruppen, einen Einsatzplaner und eine Einsatzsteuerung je Robotermaschinengruppe umfasst. Der Einsatzplaner ist in der Lage, eine Mission für die Anzahl von Robotermaschinengruppen zu erzeugen. Die Einsatzsteuerung ist in der Lage, die Mission unter Verwendung der Anzahl von Robotermaschinengruppen auszuführen.

Die DE 20 2017 004 902 U1 beschreibt ein datentechnisches System zur Organisation von Arbeitsabläufen, bei dem ein Arbeitsbereich in Produktions- oder Lagerbereiche unterteilt ist, die mittels Transportbereichen für Menschen und Maschinen zugänglich sind, wobei ein intralogistisches Prozessmanager-System eine übergeordnete Steuerung übernimmt. Für die Abwicklung von anfallenden Transportaufgaben sind zahlreiche fahrerlose Transportsysteme verschiedener Ausgestaltungen und Hersteller-eigenen Steuerungs-Untersysteme neben Transportdrohnen einsetzbar.

Es ist Aufgabe der vorliegenden Erfindung, einen besonders flexiblen und bedarfsgerechten Einsatz von fahrerlosen Transportfahrzeugen zu ermöglichen.

Diese Aufgabe wird durch ein Transportsystem, insbesondere für eine Produktionsanlage, sowie durch ein Verfahren zum Betreiben eines Transportsystems mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Das erfindungsgemäße Transportsystem, insbesondere für eine Produktionsanlage, umfasst eine erste Flotte fahrerloser Transportfahrzeuge und eine erste herstellerspezifische Leitsteuerung zum Steuern der fahrerlosen Transportfahrzeuge einer ersten Flotte. Des Weiteren umfasst das Transportsystem eine zweite Flotte fahrerloser Transportfahrzeuge und eine zweite herstellerspezifische Leitsteuerung zum Steuern der fahrerlosen Transportfahrzeuge der zweiten Flotte. Die erste Leitsteuerung und die zweite Leitsteuerung sind dabei nicht miteinander kompatibel. Dies bedeutet, dass die erste Leitsteuerung nicht zum Steuern der zweiten Flotte und die zweite Leitsteuerung nicht zum Steuern der ersten Flotte eingesetzt werden kann. Die erste Flotte der fahrerlosen Transportfahrzeuge und die zweite Flotte der fahrerlosen Transportfahrzeuge stammen genauso wie die erste herstellerspezifische Leitsteuerung und die zweite herstellerspezifische Leitsteuerung von unterschiedlichen Herstellern. Das erfindungsgemäße Transportsystem umfasst des Weiteren eine zentrale Flottensteuerung, welche über jeweilige Schnittstellen mit der ersten Leitsteuerung und der zweiten Leitsteuerung verbunden und dazu eingerichtet ist, jeweilige Fahraufträge auf die fahrerlosen Transportfahrzeuge der ersten Flotte und der zweiten Flotte zu verteilen sowie eine Verkehrsleitsteuerung für alle fahrerlosen Transportfahrzeuge der beiden Flotten auf einer flottenübergreifend gemeinsam genutzten Verkehrsfläche vorzunehmen.

Die Erfindung sieht vor, dass das Transportsystem wenigstens eine Anzeigeeinrichtung aufweist, welche dazu eingerichtet ist, flottenübergreifend die jeweiligen Positionen der fahrerlosen Transportfahrzeuge zu visualisieren. Natürlich kann das Transportsystem auch mehrere solcher Anzeigeeinrichtungen aufweisen. Beispielsweise kann eine der Anzeigeeinrichtungen in einer Leitstelle einer Produktionsanlage angeordnet sein, sodass in der Leitstelle sämtliche Positionsinformationen zu den eingesetzten fahrerlosen Transportfahrzeugen der unterschiedlichen Flotten zusammenlaufen und visualisiert werden. Herstellerunabhängig ist es somit möglich, fahrerlose Transportfahrzeuge unterschiedlichster Hersteller gleichzeitig anzuzeigen und somit einen besonders guten Überblick über Fahrwege und Positionen sämtlicher fahrerlosen Transportfahrzeuge bereitzustellen. Zudem ist es beispielsweise auch möglich, dass Werker oder auch andere Personen mit mobilen Anzeigeeinrichtungen, beispielsweise mit Tablet-Computern oder dergleichen, ausgerüstet werden, wobei mittels dieser mobilen Anzeigeeinrichtungen ebenfalls die Fahrwege und Positionen sämtlicher fahrerlosen Transportfahrzeuge bei Bedarf visualisiert werden können.

Gemäß der Erfindung ist weiter vorgesehen, dass die wenigstens eine Anzeigeeinrichtung dazu eingerichtet ist, jeweilige Positionen von flottenfremden Fahrzeugen zu visualisieren. So ist es beispielsweise auch möglich, dass manuell zu fahrende Gabelstapler oder auch ganz andere Fahrzeuge zusätzlich zu den fahrerlosen Transportfahrzeugen mittels der wenigstens einen Anzeigeeinrichtung und vorzugsweise mittels weiterer Anzeigeeinrichtungen angezeigt werden können. So können unterschiedlichste Nutzer des Transportsystems jederzeit bei Bedarf sich einen guten Überblick darüber verschaffen, wo sich die fahrerlosen Transportfahrzeuge und auch die flottenfremden Fahrzeuge gerade befinden und welche Fahrwege sie gerade benutzen.

Bei der Verkehrsfläche handelt es sich um Fahrflächen, auf welchen sich die fahrerlosen Transportfahrzeuge fortbewegen können. Die Verkehrsfläche kann sich beispielsweise innerhalb einer Halle, beispielsweise einer Produktionshalle, befinden oder auch über mehrere Hallen verteilt sein. Zudem ist es auch möglich, dass sich die Verkehrsfläche beispielsweise teilweise unter freiem Himmel und teilweise in überdachten Bereichen erstreckt. Bei den jeweiligen Schnittstellen der zentralen Flottensteuerung handelt es sich vorzugsweise um generische Schnittstellen, sodass über die Schnittstellen der zentralen Flottensteuerung auf einfache Weise ein Datenaustausch zwischen der zentralen Flottensteuerung und den herstellerspezifischen Leitsteuerungen der beiden Flotten möglich ist. Insbesondere umfassen die besagten Schnittstellen der zentralen Flottensteuerung eine jeweilige standardisierte Programmierschnittstelle. Über die jeweiligen Schnittstellen der zentralen Flottensteuerung ist es vorzugsweise möglich, über ein und dasselbe standardisiertes Datenformat Daten zwischen der zentralen Flottensteuerung und der ersten und zweiten herstellerspezifischen Leitsteuerung auszutauschen. Bei dem Datenformat kann es sich beispielsweise um die sogenannte Java Script Object Notation, JSON, handeln. Anderen Formate sind selbstverständlich aber auch möglich.

Der Erfindung liegt die Erkenntnis zugrunde, dass fahrerlose Transportfahrzeuge unterschiedlicher Hersteller üblicherweise nicht auf einer gemeinsamen Verkehrsfläche mit gemeinsamen Fahrwegen eingesetzt werden können. Denn die jeweiligen herstellerspezifischen Leitsteuerungen können nicht miteinander interagieren, da diese nicht kompatibel sind. Dadurch ergab sich bislang eine zwingende Bindung an einen ganz bestimmten Hersteller fahrerloser Transportfahrzeuge beziehungsweise fahrerloser Transportsysteme. Ein anwendungsfalloptimierter Einsatz des geeignetsten und kostenoptimalsten Herstellers eines fahrerlosen Transportsystems war bislang schwer oder gar nicht möglich. Denn bei bislang bekannten Lösungen war es erforderlich, separate Fahrwege je fahrerlosem Transportsystem-Hersteller sicherzustellen, was unter anderem erhebliche Effizienzverluste zur Folge haben konnte. Zudem war es üblicherweise bislang auch nicht möglich, eine einheitliche Leitstandvisualisierung vorzunehmen, da jeweilige Hersteller von fahrerlosen Transportsystemen und entsprechenden fahrerlosen Transportfahrzeugen üblicherweise immer eine eigene Visualisierung der eigenen herstellerspezifischen Flotte vorgenommen haben.

Durch die zentrale Flottensteuerung, welche eine Art übergeordnete und herstellerübergreifende Steuerung für die Flotten der fahrerlosen Transportfahrzeuge ist, wird ein Einsatz von mehreren, unterschiedlichen fahrerlosen Transportsystem-Herstellern auf der gleichen Verkehrsfläche ermöglicht. Die Ansteuerung der herstellerspezifischen Leitsteuerungen erfolgt über die bereits erwähnten jeweiligen Schnittstellen der zentralen Flottensteuerung, bei welcher es sich vorzugsweise um generische Ausgangsschnittstellen handelt. Durch die zentrale Flottensteuerung des erfindungsgemäßen Transportsystems wird insbesondere ein anwendungsfalloptimierter Einsatz von unterschiedlichen fahrerlosen Transportfahrzeugen von unterschiedlichen Herstellern ermöglicht. Dies ermöglicht zum einen, Kosten für das Transportsystem zu senken, da dadurch ein Wettbewerb zwischen verschiedenen Herstellern fahrerloser Transportfahrzeuge gefördert wird. Zum anderen ist es bei der erfindungsgemäßen Lösung nicht erforderlich, Anpassungen zwischen herstellerspezifischen Kommunikationsschnittstellen zur Kommunikation zwischen jeweiligen herstellerspezifischen Leitsteuerungen und ihren fahrerlosen Transportfahrzeugen vorzunehmen. Denn über die jeweiligen Schnittstellen der zentralen Flottensteuerung kann auf einfache Weise eine Kommunikation zwischen der zentralen Flottensteuerung und den flotten- und somit herstellerspezifischen Leitsteuerungen erfolgen. Natürlich ist das Transportsystem nicht auf die zwei erwähnten Flotten mit den jeweiligen fahrerlosen Transportfahrzeugen und den ersten beziehungsweise zweiten Leitsteuerungen begrenzt. Grundsätzlich ist es bei dem erfindungsgemäßen Transportsystem auch möglich, dass weitaus mehr als zwei Flotten mit jeweiligen fahrerlosen Transportfahrzeugen und jeweiligen herstellerspezifischen Leitsteuerungen eingesetzt werden.

Dadurch, dass die zentrale Flottensteuerung die Verkehrsleitsteuerung für alle fahrerlosen Transportfahrzeuge der Flotten steuern kann, ist es bei dem erfindungsgemäßen Transportsystem problemlos möglich, fahrerlose Transportfahrzeuge und somit fahrerlose Transportsysteme unterschiedlicher Hersteller gleichzeitig auf ein und derselben Verkehrsfläche zu nutzen. Die die zentrale Flottensteuerung kann dafür sorgen, dass die fahrerlosen Transportfahrzeuge von unterschiedlichen Herstellern mit entsprechend herstellerspezifischen Leitsteuerungen auf koordinierte Weise ein und dieselbe Verkehrsfläche gemeinsam nutzen können, ohne dass Kollisionen oder sonstige Probleme auftreten. Mittels des erfindungsgemäßen Transportsystems wird somit ein besonders flexibler und bedarfsgerechter Einsatz von fahrerlosen Transportfahrzeugen unterschiedlichster Hersteller ermöglicht. Je nach Aufgabenstellung können die am besten passenden fahrerlosen Transportfahrzeuge - und zwar unabhängig davon, von welchem Hersteller sie stammen - eingesetzt werden.

Eine vorteilhafte Ausführungsform der Erfindung sieht vor, dass die Leitsteuerungen und/oder die fahrerlosen Transportfahrzeuge dazu ausgelegt sind, jeweilige Positionsdaten der fahrerlosen Transportfahrzeuge an die zentrale Flottensteuerung zu übertragen, welche dazu eingerichtet ist, in Abhängigkeit von den Positionsdaten die Verkehrsleitsteuerung vorzunehmen. Ferner ist es auch möglich, dass die zentrale Flottensteuerung in Abhängigkeit von den übermittelten Positionsdaten Fahraufträge auf die fahrerlosen Transportfahrzeuge verteilt. Dadurch, dass die Positionsdaten der jeweiligen fahrerlosen Transportfahrzeuge der zentralen Flottensteuerung vorzugsweise jederzeit bekannt sind, kann diese auf besonders zuverlässige Weise die Verkehrsleitsteuerung sämtlicher fahrerlosen Transportfahrzeuge übernehmen und dadurch insbesondere Kollisionen oder andere Probleme zwischen den fahrerlosen Transportfahrzeugen vermeiden. Zudem ist es in Kenntnis der jeweiligen Positionsdaten auf einfache Weise für die zentrale Flottensteuerung möglich, die jeweiligen Fahraufträge auf die unterschiedlichen fahrerlosen Transportfahrzeuge besonders optimal zu verteilen. Je nachdem, wohin beispielsweise bestimmte Güter von einem Punkt zu einem anderen Punkt transportiert werden müssen, ist es für die zentrale Flottensteuerung in Kenntnis der jeweiligen Positionsdaten aller fahrerlosen Transportfahrzeuge auf einfache Weise möglich, beispielsweise dasjenige fahrerlose Transportfahrzeug für einen bestimmten Fahrauftrag auszuwählen, welches besonders nah an einem Abholort von bestimmten, zu transportierenden Waren angeordnet ist. Vorzugsweise können die jeweiligen Positionsdaten der fahrerlosen Transportfahrzeuge in sehr kurzen Zeitabständen, beispielsweise im Sekundentakt oder auch in Bruchteilen von Sekunden, an die zentrale Flottensteuerung übertragen werden. So weiß die zentrale Flottensteuerung quasi in Echtzeit, wo sich die jeweiligen fahrerlosen Transportfahrzeuge gerade aufhalten. Hierdurch kann insbesondere eine besonders gute Verkehrsleitsteuerung aller fahrerlosen Transportfahrzeuge der unterschiedlichen Flotten erfolgen.

In weiterer vorteilhafter Ausgestaltung der Erfindung ist es vorgesehen, dass die zentrale Flottensteuerung dazu eingerichtet ist, bei der Verkehrsleitsteuerung Vorfahrtsregelungen zwischen den fahrerlosen Transportfahrzeugen vorzunehmen. Beispielsweise kann die zentrale Flottensteuerung so an bestimmten Kreuzungen von Fahrwegen der unterschiedlichen fahrerlosen Transportfahrzeuge entscheiden, welches der fahrerlosen Transportfahrzeuge gerade Vorfahrt haben soll und welches der fahrerlosen Transportfahrzeuge warten soll, bis die Kreuzung von dem anderen fahrerlosen Transportfahrzeug passiert worden ist. So kann die zentrale Flottensteuerung auf einfache Weise im Zuge der Verkehrsleitsteuerung sicherstellen, dass die fahrerlosen Transportfahrzeuge sich gegenseitig nicht blockieren oder miteinander kollidieren.

Eine weitere vorteilhafte Ausführungsform der Erfindung sieht vor, dass die zentrale Flottensteuerung dazu eingerichtet ist, die Verkehrsleitsteuerung auf der Verkehrsfläche festzulegen, um diese nur dann zum Durchfahren freizugeben, wenn sich in den Blockierungsbereichen keine fahrerlosen Transportfahrzeuge befinden. Dadurch kann auf einfache Weise sichergestellt werden, dass die fahrerlosen Transportfahrzeuge sich gegenseitig nicht blockieren oder gar miteinander kollidieren. Es ist also möglich, in Anlehnung an klassische Verfahren im Eisenbahnverkehr grundsätzlich Kollisionen und Blockungen zwischen den verschiedenen fahrerlosen Transportfahrzeugen zu verhindern. So ist es beispielsweise möglich, dass die von allen fahrerlosen Transportfahrzeugen gemeinsam genutzte Verkehrsfläche in unterschiedliche Blockierungsbereiche aufgeteilt wird. Einem der fahrerlosen Transportfahrzeuge ist es im Allgemeinen dann beispielsweise nur erlaubt, in einen bestimmten Blockungsbereich einzufahren, wenn dieser frei von anderen fahrerlosen Transportfahrzeugen oder auch anderen Verkehrsteilnehmern ist.

In weiterer vorteilhafter Ausgestaltung der Erfindung ist es vorgesehen, dass die zentrale Flottensteuerung eine Schnittstelle für ein Transportleitsystem und/oder für ein Lagerverwaltungssystem aufweist, um Transportaufträge zu empfangen und basierend darauf Fahraufträge zu erzeugen. Die zentrale Flottensteuerung dient also als Vermittler zwischen einem Transportleitsystem und/oder einem Lagerverwaltungssystem und den einzelnen herstellerspezifischen Leitsteuerungen für die jeweiligen Flotten der fahrerlosen Transportfahrzeuge. So können die besagten Transportleitsysteme und/oder die Lagerverwaltungssysteme unterschiedliche Transportaufträge generieren und diese der zentralen Flottensteuerung über die besagte Schnittstelle zur Verfügung stellen. Nach unterschiedlichsten Kriterien kann die zentrale Flottensteuerung dann basierend auf diesen Transportaufträgen für bestimmte Güter die besagten Fahraufträge erzeugen und nach einer vorgegebenen Logik den einzelnen Fahrzeugen der unterschiedlichen Flotten zuweisen. Vorzugsweise ist die zentrale Flottensteuerung dazu eingerichtet, basierend auf den jeweiligen Transportaufträgen die dazu passenden, insbesondere eine entsprechende Ladekapazität aufweisenden, fahrerlosen Transportfahrzeuge auszuwählen und die Fahraufträge entsprechend zu verteilen. Beispielsweise ist es denkbar, dass die erste Flotte nur fahrerlose Transportfahrzeuge zum Aufnehmen von Kleinladungsträgern aufweist, wobei die zweite Flotte nur fahrerlose Transportfahrzeuge zum Aufnehmen von Großladungsträgern aufweist. In Kenntnis der jeweiligen Transportaufträge und der damit verbundenen Ladungsträger kann die zentrale Flottensteuerung beispielsweise Fahraufträge so generieren und verteilen, dass auch nur die fahrerlosen Transportfahrzeuge die Fahraufträge erhalten, welche hinsichtlich ihrer Ladekapazität, insbesondere im Hinblick auf ihre Eignung zur Aufnahme von Kleinladungsträgern oder Großladungsträgern, den Fahrauftrag und somit auch den Transportauftrag sinnvoll und gut durchführen können. Zudem können beispielsweise auch Abmessungen der einzelnen fahrerlosen Transportfahrzeuge oder auch andere Parameter bei der Generierung und Zuweisung der Fahraufträge auf die einzelnen fahrerlosen Transportfahrzeuge berücksichtigt werden. Auf diese Weise ist es möglich, dass die zentrale Flottensteuerung passend zu den jeweiligen Transportaufträgen und gegebenenfalls auch beispielsweise passend zu den jeweiligen Randbedingungen im Hinblick auf die zu durchfahrenden Routen die jeweils passenden fahrerlosen Transportfahrzeuge auswählt.

Bei dem erfindungsgemäßen Verfahren zum Betreiben des erfindungsgemäßen Transportsystems oder einer vorteilhaften Ausführungsform des erfindungsgemäßen Transportsystems verteilt die zentrale Flottensteuerung jeweilige Fahraufträge auf die fahrerlosen Transportfahrzeuge der ersten Flotte und der zweiten Flotte und nimmt eine Verkehrsleitsteuerung für alle fahrerlosen Transportfahrzeuge der beiden Flotten auf einer flottenübergreifend gemeinsam genutzten Verkehrsfläche vor. Die erste Flotte fahrerloser Transportfahrzeuge wird mittels der ersten herstellerspezifischen Leitsteuerung gemäß der Fahraufträge gesteuert, wobei die zweite Flotte fahrerloser Transportfahrzeuge mittels der zweiten herstellerspezifischen Leitsteuerung gemäß der Fahraufträge gesteuert wird. Vorteilhafte Ausgestaltungen des erfindungsgemäßen Transportsystems sind als vorteilhafte Ausgestaltungen des erfindungsgemäßen Verfahrens und umgekehrt anzusehen, wobei das Transportsystem insbesondere Mittel zur Durchführung der Verfahrensschritte aufweist.

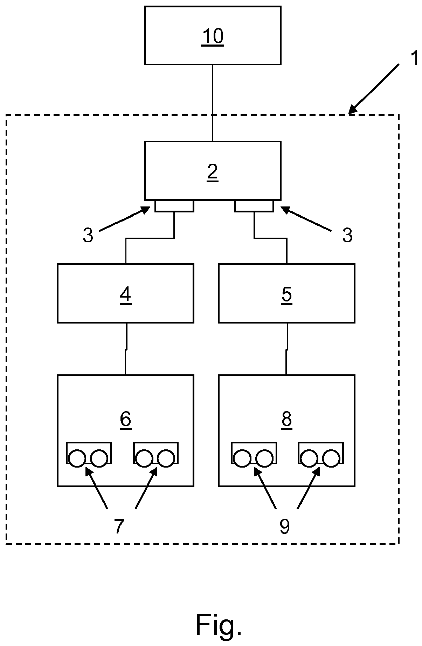

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine schematische Darstellung eines Transportsystems, welches mehrere fahrerlose Transportfahrzeuge aufweist.

Ein Transportsystem 1 ist in einer stark schematisierten Darstellung in der einzigen Figur gezeigt. Das Transportsystem 1 umfasst eine zentrale Flottensteuerung, welche über jeweilige Schnittstellen 3 mit einer ersten Leitsteuerung 4 und einer zweiten Leitsteuerung 5 verbunden ist. Die erste Leitsteuerung 4 dient zum Steuern einer ersten Flotte 6 von fahrerlosen Transportfahrzeugen 7. Die zweite Leisteuerung 5 dient zum Steuern einer zweiten Flotte 8 jeweiliger fahrerloser Transportfahrzeuge 9. Die zentrale Flottensteuerung 2 ist zudem über eine hier nicht näher dargestellte Schnittstelle mit wenigstens einem vorgelagerten System 10 verbunden. Bei dem vorgelagerten System 10 kann es sich beispielsweise um ein Transportleitsystem oder auch beispielsweise um ein Lagerverwaltungssystem handeln, welches seinerseits mit dem besagten Transportleitsystem kommunizieren kann. Über das vorgelagerte System 10 kann die zentrale Flottensteuerung 2 so verschiedenste Transportaufträge beispielsweise für eine Produktionsanlage oder dergleichen empfangen.

Die erste Flotte 6 der fahrerlosen Transportfahrzeuge 7 und die zweite Flotte 8 der fahrerlosen Transportfahrzeuge 9 stammen dabei von unterschiedlichen Herstellern, genauso wie die erste herstellerspezifische Leitsteuerung 4 und die zweite herstellerspezifische Leitsteuerung 5. Die beiden Leitsteuerungen 4, 5 sind also nicht miteinander kompatibel und können auch nicht miteinander kommunizieren. Dennoch ist es bei dem hier gezeigten Transportsystem möglich, die unterschiedlichen fahrerlosen Transportfahrzeuge 7, 9 der ersten Flotte 6 und der zweiten Flotte 8 auf ein und derselben Verkehrsfläche gemeinsam zu nutzen.

Die zentrale Flottensteuerung 2 erhält von dem vorgelagerten System 10 beispielsweise immer wieder Transportaufträge betreffend die Verteilung von bestimmten Gütern. In Abhängigkeit von diesen Transportaufträgen generiert die zentrale Flottensteuerung 2 jeweilige Fahraufträge und weist diese den passenden fahrerlosen Transportfahrzeugen 7, 9 zu. Passend zu dem jeweiligen Fahrauftrag übernehmen die herstellerspezifischen Leitsteuerungen 4 beziehungsweise 5 die eigentliche Ansteuerung der jeweiligen fahrerlosen Transportfahrzeuge 7, 9, um die jeweiligen Fahraufträge zu erfüllen, sodass die fahrerlosen Transportfahrzeuge 7, 9 also beispielsweise an einem bestimmten Ort Bauteile aufnehmen, um diese an einem anderen Ort abzuliefern.

Der zentralen Flottensteuerung 2 kommt dabei die Aufgabe einer Verkehrsleitsteuerung für alle eingesetzten fahrerlosen Transportfahrzeuge 7, 9 zu. Die zentrale Flottensteuerung 2 sorgt also dafür, dass die herstellerspezifischen unterschiedlichen fahrerlosen Transportfahrzeuge 7, 9 sich auf der gemeinsam genutzten Verkehrsfläche nicht gegenseitig blockieren oder gar miteinander kollidieren.

In diesem Zusammenhang ist es vorgesehen, dass die Leitsteuerung 4, 5 und/oder die fahrerlosen Transportfahrzeuge 7, 9 dazu ausgelegt sind, jeweilige Positionsdaten der fahrerlosen Transportfahrzeuge 7, 9 an die zentrale Flottensteuerung 2 zu übertragen. In Kenntnis dieser Positionsdaten kann die Verkehrsleitsteuerung durch die zentrale Flottensteuerung 2 erfolgen. Zudem weist das Transportsystem 1 wenigstens eine hier nicht dargestellte Anzeigeeinrichtung auf, welche dazu eingerichtet ist, flottenübergreifend die jeweiligen Positionen der fahrerlosen Transportfahrzeuge 7, 9 zu visualisieren. Diese Anzeigeeinrichtung kann als eine zentrale Benutzeroberfläche dienen, sodass unterschiedliche Nutzer bei Bedarf jederzeit angezeigt bekommen können, wo sich die fahrerlosen Transportfahrzeuge 7, 9 aufhalten. Da die Positionsdaten der fahrerlosen Transportfahrzeuge 7, 9 vorzugsweise innerhalb kürzester Zeitabstände aktualisiert und wieder an die zentrale Flottensteuerung 2 übertragen werden, kann diese die Visualisierung der Positionierung der fahrerlosen Transportfahrzeuge 7, 9 auf der besagten Anzeigeeinrichtung quasi in Echtzeit aktualisieren. Natürlich ist es auch möglich, dass das Transportsystem 1 eine Vielzahl stationärer und mobiler Anzeigeeinrichtungen aufweist, welche ihrerseits jeweils dazu eingerichtet sind, flottenübergreifend die jeweiligen Positionen aller fahrerlosen Transportfahrzeuge 7, 9 zu visualisieren. Zudem kann es auch vorgesehen sein, dass diese Anzeigeeinrichtungen die jeweiligen Positionen von flottenfremden Fahrzeugen ebenfalls visualisieren können, sodass beispielsweise manuell zu bewegende Gabelstapler oder auch andere Fahrzeuge ebenfalls zusammen mit den fahrerlosen Transportfahrzeugen 7, 9 auf einer einzigen Anzeigefläche jeweils visualisiert werden können.

Insbesondere kann die zentrale Flottensteuerung 2 im Zuge der Verkehrsleitsteuerung Vorfahrtsregeln zwischen den fahrerlosen Transportfahrzeugen 7, 9 vornehmen. In Abhängigkeit von unterschiedlichsten Randbedingungen kann die zentrale Flottensteuerung 2 bei der Durchführung der verteilten Fahraufträge entscheiden, welchem der fahrerlosen Transportfahrzeuge 7, 9 in einer bestimmten Situation jeweils Vorfahrt zu gewähren ist. So kann die zentrale Flottensteuerung 2 beispielsweise im Zuge der Verkehrsleitsteuerung auf der gemeinsam genutzten Verkehrsfläche Blockierungsbereiche festlegen, wobei diese nur dann zum Durchfahren freigegeben werden, wenn sich in den festgelegten Blockierungsbereichen gerade keines der fahrerlosen Transportfahrzeuge 7, 9 befindet. Die Verkehrsleitsteuerung durch die zentrale Flottensteuerung 2 kann beispielsweise also in Anlehnung an klassische Verfahren im Eisenbahnverkehr erfolgen. Auch ohne dass die herstellerspezifischen Leitsteuerungen 4, 5 der ersten Flotte 6 und der zweiten Flotte 8 miteinander kommunizieren können, kann also die zentrale Flottensteuerung 2 jederzeit und problemlos dafür sorgen, dass sich die herstellerspezifischen fahrerlosen Transportfahrzeuge 7, 9 nicht gegenseitig blockieren oder gar miteinander kollidieren.

Die zentrale Flottensteuerung 2 ist zudem vorzugsweise dazu eingerichtet, basierend auf den jeweiligen von dem vorgelagerten System 10 stammenden Transportaufträgen die dazu passenden fahrerlosen Transportfahrzeuge 7, 9 auszuwählen. Beispielsweise wäre es denkbar, dass die erste Flotte 6 nur fahrerlose Transportfahrzeuge 7 zum Aufnehmen und Transportieren von Kleinladungsträgern aufweist, wobei die zweite Flotte 8 beispielsweise ausschließlich fahrerlose Transportfahrzeuge 9 zum Aufnehmen von Großladungsträgern aufweist. Je nach Transportauftrag kann die zentrale Flottensteuerung 2 in Kenntnis dieser Eigenschaften der fahrerlosen Transportfahrzeuge 7, 9 die passenden Fahraufträge an die jeweils erfassten fahrerlosen Transportfahrzeuge 7 beziehungsweise 9 verteilen. Grundsätzlich kann die zentrale Flottensteuerung 2 beliebige Randbedingungen und Eigenschaften der fahrerlosen Transportfahrzeuge 7, 9 bei der Generierung und Verteilung der Fahraufträge berücksichtigen.

Mittels des beschriebenen Transportsystems 1 ist es auf einfache Weise möglich, einen jeweils anwendungsfalloptimierten Einsatz der unterschiedlichen fahrerlosen Transportfahrzeuge 7, 9 vorzunehmen. Anhand der einzigen Figur wurde lediglich beispielhaft die Funktionsweise des Transportsystems 1 anhand der beiden Flotten 6, 8 beschrieben. Natürlich ist es auch möglich, dass das Transportsystem 1 eine weitaus größere Zahl an unterschiedlichen weiteren Flotten mit jeweiligen herstellerspezifischen fahrerlosen Transportfahrzeugen 7, 9 aufweist, wobei die zentrale Flottensteuerung 2 in der bereits beschriebenen Weise auch auf die jeweiligen, zu den hier nicht weiter dargestellten Flotten gehörenden Leitsteuerungen zugreifen kann.

Da die Anbindung der herstellerspezifischen Leitsteuerungen 4, 5 über die generischen Schnittstellen 3 erfolgt, können grundsätzlich beliebige Leitsteuerungen 4, 5 von unterschiedlichsten Herstellern an die zentrale Flottensteuerung 2 angebunden werden. Die hier dargestellte Anordnung des Transportsystems 1 ist also rein exemplarisch zu verstehen. Durch das Vorsehen der generischen Schnittstellen 3 an der zentralen Flottensteuerung 2 müssen keine spezifischen Anpassungen bei der Kommunikation zwischen den jeweiligen Leitsteuerungen 4, 5 und den fahrerlosen Transportfahrzeugen 7, 9 erfolgen. Es können also jeweilige herstellerspezifisch vorgegebene Schnittstellen zwischen den Leitsteuerungen 4, 5 und den fahrerlosen Transportfahrzeugen 7, 9 unangetastet bleiben.

## Patentansprüche

1. Transportsystem (1), insbesondere für eine Produktionsanlage, umfassend
- eine erste Flotte (6) fahrerloser Transportfahrzeuge (7) und eine erste herstellerspezifische Leitsteuerung (4) zum Steuern der fahrerlosen Transportfahrzeuge (7) der ersten Flotte (6);
- eine zweite Flotte (8) fahrerloser Transportfahrzeuge (9) und eine zweite herstellerspezifische Leitsteuerung (5) zum Steuern der fahrerlosen Transportfahrzeuge (9) der zweiten Flotte (8), wobei die erste Leitsteuerung (4) und die zweite Leitsteuerung (5) nicht miteinander kompatibel sind, wobei die erste Flotte (6) der fahrerlosen Transportfahrzeuge (7) und die zweite Flotte (8) der fahrerlosen Transportfahrzeuge (9) genauso wie die erste herstellerspezifische Leitsteuerung (4) und die zweite herstellerspezifische Leitsteuerung (5) von unterschiedlichen Herstellern stammen;
- eine zentrale Flottensteuerung (2), welche über jeweilige Schnittstellen (3) mit der ersten Leitsteuerung (4) und der zweiten Leitsteuerung (5) verbunden und dazu eingerichtet ist, jeweilige Fahraufträge auf die fahrerlosen Transportfahrzeuge der ersten Flotte (6) und der zweiten Flotte (8) zu verteilen sowie eine Verkehrsleitsteuerung für alle fahrerlosen Transportfahrzeuge (7, 9) der beiden Flotten (6, 8) auf einer flottenübergreifend gemeinsam genutzten Verkehrsfläche vorzunehmen, wobei es sich bei der Verkehrsfläche um Fahrflächen handelt, auf welchen sich die fahrerlosen Transportfahrzeuge (7, 9) fortbewegen können, **dadurch gekennzeichnet, dass** das Transportsystem (1) wenigstens eine Anzeigeeinrichtung aufweist, welche dazu eingerichtet ist, flottenübergreifend die jeweiligen Positionen der fahrerlosen Transportfahrzeuge (7, 9) zu visualisieren, und wobei die wenigstens eine Anzeigeeinrichtung dazu eingerichtet ist, jeweilige Positionen von flottenfremden Fahrzeugen zu visualisieren.

2. Transportsystem (1) nach Anspruch 1,
**dadurch gekennzeichnet, dass**
die Leitsteuerungen (4, 5) und/oder die fahrerlosen Transportfahrzeuge (7, 9) dazu ausgelegt sind, jeweilige Positionsdaten der fahrerlosen Transportfahrzeuge (7, 9) an die zentrale Flottensteuerung (2) zu übertragen, welche dazu eingerichtet ist, in Abhängigkeit von den Positionsdaten die Verkehrsleitsteuerung vorzunehmen.

3. Transportsystem (1) nach einem der vorhergehenden Ansprüche, **dadurch gekennzeichnet, dass**
die zentrale Flottensteuerung (2) dazu eingerichtet ist, bei der Verkehrsleitsteuerung Vorfahrtsregelungen zwischen den fahrerlosen Transportfahrzeugen (7, 9) vorzunehmen.

4. Transportsystem (1) nach einem der vorhergehenden Ansprüche, **dadurch gekennzeichnet, dass**
die zentrale Flottensteuerung (2) dazu eingerichtet ist, bei der Verkehrsleitsteuerung auf der Verkehrsfläche Blockierungsbereiche festzulegen, und diese nur dann zum Durchfahren freizugeben, wenn sich in den Blockierungsbereichen keine fahrerlosen Transportfahrzeuge (7, 9) befinden.

5. Transportsystem (1) nach einem der vorhergehenden Ansprüche, **dadurch gekennzeichnet, dass**
die zentrale Flottensteuerung (2) eine Schnittstelle für ein Transportleitsystem und/oder für ein Lagerverwaltungssystem aufweist, um Transportaufträge zu empfangen und basierend darauf die Fahraufträge zu erzeugen.

6. Transportsystem (1) nach Anspruch 5,
**dadurch gekennzeichnet, dass**
die zentrale Flottensteuerung (2) dazu eingerichtet ist, basierend auf den jeweiligen Transportaufträgen die dazu passenden, insbesondere eine entsprechende Ladekapazität aufweisenden, fahrerlosen Transportfahrzeuge (7, 9) auszuwählen und die Fahraufträge entsprechend zu verteilen.

7. Verfahren zum Betreiben eines Transportsystems (1), das Transportsystem aufweisend:
- eine erste Flotte (6) fahrerloser Transportfahrzeuge (7) und eine erste herstellerspezifische Leitsteuerung (4) zum Steuern der fahrerlosen Transportfahrzeuge (7) der ersten Flotte (6);
- eine zweite Flotte (8) fahrerloser Transportfahrzeuge (9) und eine zweite herstellerspezifische Leitsteuerung (5) zum Steuern der fahrerlosen Transportfahrzeuge (9) der zweiten Flotte (8), wobei die erste Leitsteuerung (4) und die zweite Leitsteuerung (5) nicht miteinander kompatibel sind, wobei die erste Flotte (6) der fahrerlosen Transportfahrzeuge (7) und die zweite Flotte (8) der fahrerlosen Transportfahrzeuge (9) genauso wie die erste herstellerspezifische Leitsteuerung (4) und die zweite herstellerspezifische Leitsteuerung (5) von unterschiedlichen Herstellern stammen;
- eine zentrale Flottensteuerung (2), welche über jeweilige Schnittstellen (3) mit der ersten Leitsteuerung (4) und der zweiten Leitsteuerung (5) verbunden und dazu eingerichtet ist, jeweilige Fahraufträge auf die fahrerlosen Transportfahrzeuge der ersten Flotte (6) und der zweiten Flotte (8) zu verteilen sowie eine Verkehrsleitsteuerung für alle fahrerlosen Transportfahrzeuge (7, 9) der beiden Flotten (6, 8) auf einer flottenübergreifend gemeinsam genutzten Verkehrsfläche vorzunehmen, wo-bei es sich bei der Verkehrsfläche um Fahrflächen handelt, auf welchen sich die fahrerlosen Transportfahrzeuge (7, 9) fortbewegen können, wobei das Transportsystem (1) wenigstens eine Anzeigeeinrichtung aufweist, wobei bei dem Verfahren
- die zentrale Flottensteuerung (2) jeweilige Fahraufträge auf die fahrerlosen Transportfahrzeuge der ersten Flotte (6) und der zweiten Flotte (8) verteilt sowie eine Verkehrsleitsteuerung für alle fahrerlosen Transportfahrzeuge (7, 9) der beiden Flotten (6, 8) auf einer flottenübergreifend gemeinsam genutzten Verkehrsfläche vornimmt.
- die erste Flotte (6) fahrerloser Transportfahrzeuge (7) mittels der ersten herstellerspezifischen Leitsteuerung (4) gemäß der Fahraufträge gesteuert wird;
- die zweite Flotte (8) fahrerloser Transportfahrzeuge (9) mittels der zweiten herstellerspezifischen Leitsteuerung (5) gemäß der Fahraufträge gesteuert wird, **dadurch gekennzeichnet, dass** die wenigstens eine Anzeigeeinrichtung flottenübergreifend sowohl die jeweiligen Positionen der fahrerlosen Transportfahrzeuge (7,9) als auch die jeweiligen Positionen von flottenfremden Fahrzeugen visualisiert.

## Claims

1. Transport system (1), in particular for a production plant, comprising
- a first fleet (6) of driverless transport vehicles (7) and a first manufacturer-specific master controller (4) for controlling the driverless transport vehicles (7) of the first fleet (6);
- a second fleet (8) of driverless transport vehicles (9) and a second manufacturer-specific master controller (5) for controlling the driverless transport vehicles (9) of the second fleet (8), wherein the first master controller (4) and the second master controller (5) are not compatible with one another, wherein the first fleet (6) of the driverless transport vehicles (7) and the second fleet (8) of the driverless transport vehicles (9), just like the first manufacturer-specific master controller (4) and the second manufacturer-specific master controller (5), originate from different manufacturers;
- a central fleet controller (2) which is connected via respective interfaces (3) to the first master controller (4) and the second master controller (5) and is set up to distribute respective driving instructions to the driverless transport vehicles of the first fleet (6) and of the second fleet (8) and to carry out traffic control for all driverless transport vehicles (7, 9) of the two fleets (6, 8) on a common, cross-fleet traffic area, the traffic area being driving areas on which the driverless transport vehicles (7, 9) can move themselves,
**characterised in that** the transport system (1) has at least one display device which is set up to visualise the respective positions of the driverless transport vehicles (7, 9) across fleets, and wherein the at least one display device is set up to visualise the respective positions of non-fleet vehicles.

2. Transport system (1) according to claim 1,
**characterised in that**
the master controllers (4, 5) and/or the driverless transport vehicles (7, 9) are configured to transmit respective position data of the driverless transport vehicles (7, 9) to the central fleet controller (2), which is set up to carry out the traffic control as a function of the position data.

3. Transport system (1) according to any one of the preceding claims,
**characterised in that**
the central fleet controller (2) is set up to carry out, during the traffic control, right-of-way rules between the driverless transport vehicles (7, 9).

4. Transport system (1) according to any one of the preceding claims,
**characterised in that**
the central fleet control (2) is set up to define, during the traffic control, blocking areas in the traffic area, and to release these blocking areas for passage only if no driverless transport vehicles (7, 9) are located in the blocking areas.

5. Transport system (1) according to any one of the preceding claims,
**characterised in that**
the central fleet controller (2) has an interface for a transport control system and/or for a warehouse management system in order to receive transport instructions and to generate the driving instructions on the basis thereof.

6. Transport system (1) according to claim 5,
**characterised in that**
the central fleet controller (2) is set up to select, on the basis of the respective transport instructions, the appropriate driverless transport vehicles (7, 9), in particular those with a corresponding loading capacity, and to distribute the driving instructions accordingly.

7. Method for operating a transport system (1), the transport system having:
- a first fleet (6) of driverless transport vehicles (7) and a first manufacturer-specific master controller (4) for controlling the driverless transport vehicles (7) of the first fleet (6);
- a second fleet (8) of driverless transport vehicles (9) and a second manufacturer-specific master controller (5) for controlling the driverless transport vehicles (9) of the second fleet (8), wherein the first master controller (4) and the second master controller (5) are not compatible with one another, wherein the first fleet (6) of the driverless transport vehicles (7) and the second fleet (8) of the driverless transport vehicles (9), just like the first manufacturer-specific master controller (4) and the second manufacturer-specific master controller (5), originate from different manufacturers;
- a central fleet controller (2) which is connected via respective interfaces (3) to the first master controller (4) and the second master controller (5) and is set up to distribute respective driving instructions to the driverless transport vehicles of the first fleet (6) and of the second fleet (8) and to carry out traffic control for all driverless transport vehicles (7, 9) of the two fleets (6, 8) on a common, cross-fleet traffic area, the traffic area being driving areas on which the driverless transport vehicles (7, 9) can move themselves, wherein the transport system (1) has at least one display device,
wherein in the method
- the central fleet controller (2) distributes respective driving orders to the driverless transport vehicles of the first fleet (6) and of the second fleet (8) and carries out traffic control for all driverless transport vehicles (7, 9) of the two fleets (6, 8) on a common, cross-fleet traffic area.
- the first fleet (6) of driverless transport vehicles (7) is controlled by means of the first manufacturer-specific master controller (4) in accordance with the driving instructions;
- the second fleet (8) of driverless transport vehicles (9) is controlled by means of the second manufacturer-specific master controller (5) in accordance with the driving instructions, **characterised in that** the at least one display device visualises across the fleets both the respective positions of the driverless transport vehicles (7, 9) and the respective positions of non-fleet vehicles.

## Revendications

1. Système de transport (1), en particulier pour une installation de production, comprenant
- une première flotte (6) de véhicules de transport (7) sans conducteur et une première commande principale (4) spécifique au constructeur pour la commande des véhicules de transport (7) sans conducteur de la première flotte (6) ;
- une seconde flotte (8) de véhicules de transport (9) sans conducteur et une seconde commande principale (5) spécifique au constructeur pour la commande des véhicules de transport (9) sans conducteur de la seconde flotte (8), dans lequel la première commande principale (4) et la seconde commande principale (5) ne sont pas compatibles l'une avec l'autre, dans lequel la première flotte (6) de véhicules de transport (7) sans conducteur et la seconde flotte (8) de véhicules de transport (9) sans conducteur tout comme la première commande principale (4) spécifique au constructeur (4) et la seconde commande principale (5) spécifique au constructeur proviennent de différents constructeurs ;
- une commande de flotte (2) centrale qui est reliée par le biais d'interfaces respectives (3) à la première commande principale (4) et à la seconde commande principale (5) et est conçue afin de distribuer des commandes de déplacement respectives aux véhicules de transport sans conducteur de la première flotte (6) et de la seconde flotte (8) ainsi que d'entreprendre une commande principale de circulation pour tous les véhicules de transport (7, 9) sans conducteur des deux flottes (6, 8) sur une surface de circulation utilisée en commun pour toutes les flottes, dans lequel il s'agit pour la surface de circulation de surfaces de roulement, sur lesquelles les véhicules de transport (7, 9) sans conducteur peuvent se déplacer, **caractérisé en ce que** le système de transport (1) présente au moins un dispositif d'affichage qui est conçu afin de visualiser pour toutes les flottes les positions respectives des véhicules de transport (7, 9) sans conducteur, et dans lequel l'au moins un dispositif d'affichage est conçu afin de visualiser des positions respectives de véhicules externes à la flotte.

2. Système de transport (1) selon la revendication 1,
**caractérisé en ce que**
les commandes principales (4, 5) et/ou les véhicules de transport sans conducteur (7, 9) sont conçus afin de transmettre des données de position respectives des véhicules de transport sans conducteur (7, 9) à la commande de flotte (2) centrale qui est conçue afin d'entreprendre en fonction des données de position la commande principale de circulation.

3. Système de transport (1) selon l'une quelconque des revendications précédentes,
**caractérisé en ce que**
la commande de flotte (2) centrale est conçue afin d'entreprendre lors de la commande principale de circulation des règles de priorité entre les véhicules de transport (7, 9) sans conducteur.

4. Système de transport (1) selon l'une quelconque des revendications précédentes, **caractérisé en ce que**
la commande de flotte (2) centrale est conçue afin de fixer lors de la commande principale de circulation sur la surface de circulation des zones de blocage et de libérer celles-ci seulement pour la traversée lorsqu'aucun véhicule de transport (7, 9) sans conducteur ne se trouve dans les zones de blocage.

5. Système de transport (1) selon l'une quelconque des revendications précédentes, **caractérisé en ce que**
la commande de flotte (2) centrale présente une interface pour un système principal de transport et/ou pour un système de gestion de stock afin de recevoir des commandes de transport et de générer sur cette base les commandes de déplacement.

6. Système de transport (1) selon la revendication 5,
**caractérisé en ce que**
la commande de flotte (2) centrale est conçue afin de sélectionner sur la base des commandes de transport respectives les véhicules de transport (7, 9) sans conducteur, présentant en particulier une capacité de charge correspondante, adaptée à celles-ci et de distribuer en conséquence les commandes de déplacement.

7. Procédé de fonctionnement d'un système de transport (1), le système de transport présentant :
- une première flotte (6) de véhicules de transport (7) sans conducteur et une première commande principale (4) spécifique au constructeur pour la commande des véhicules de transport (7) sans conducteur de la première flotte (6) ;
- une seconde flotte (8) de véhicules de transport (9) sans conducteur et une seconde commande principale (5) spécifique au constructeur pour la commande des véhicules de transport (9) sans conducteur de la seconde flotte (8), dans lequel la première commande principale (4) et la seconde commande principale (5) ne sont pas compatibles l'une avec l'autre, dans lequel la première flotte (6) de véhicules de transport (7) sans conducteur et la seconde flotte (8) de véhicules de transport (9) sans conducteur tout comme la première commande principale (4) spécifique au constructeur (4) et la seconde commande principale (5) spécifique au constructeur proviennent de différents constructeurs ;
- une commande de flotte (2) centrale qui est reliée par le biais d'interfaces respectives (3) à la première commande principale (4) et à la seconde commande principale (5) et est conçue afin de distribuer des commandes de déplacement respectives sur les véhicules de transport sans conducteur de la première flotte (6) et de la seconde flotte (8) ainsi que d'entreprendre une commande principale de circulation pour tous les véhicules de transport (7, 9) sans conducteur des deux flottes (6, 8) sur une surface de circulation utilisée en commun pour toutes les flottes, dans lequel il s'agit pour la surface de circulation de surfaces de roulement, sur lesquelles les véhicules de transport (7, 9) sans conducteur peuvent se déplacer, dans lequel le système de transport (1) présente au moins un dispositif d'affichage, dans lequel pour le procédé
- la commande de flotte (2) centrale distribue des commandes de déplacement respectives aux véhicules de transport sans conducteur de la première flotte (6) et de la seconde flotte (8) ainsi qu'entreprend une commande principale de circulation pour tous les véhicules de transport sans conducteur (7, 9) des deux flottes (6, 8) sur une surface de circulation utilisée en commun pour toutes les flottes,
- la première flotte (6) de véhicules de transport (7) sans conducteur est commandée au moyen de la première commande principale (4) spécifique au constructeur selon les commandes de déplacement ;
- la seconde flotte (8) de véhicules de transport (9) sans conducteur est commandée au moyen de la seconde commande principale (5) spécifique au constructeur selon les commandes de déplacement, **caractérisé en ce que** l'au moins un dispositif d'affichage visualise pour toutes les flottes non seulement les positions respectives des véhicules de transport (7, 9) sans conducteur mais aussi les positions respectives de véhicules externes à la flotte.
